# FASCICULE DE BREVET EUROPEEN

(11) **EP 3 694 757 B1**
(45) Date de publication et mention de la délivrance du brevet: **26.06.2024**
(21) Numéro de dépôt: 18780198.0
(22) Date de dépôt: 17.09.2018
(51) Int. Cl.: B60W 50/00, B60W 20/00, B60W 30/00, B60K 6/52

(54) **SYSTEME DE COMMANDE ET STRATEGIE AUTO-ADAPTATIVE DU MODE DE CONDUITE D'UN GROUPE MOTOPROPULSEUR**
STEUERUNGSSYSTEM UND SELBSTADAPTIVE STRATEGIE FÜR DEN FAHRBETRIEB EINER MOTORGETRIEBEEINHEIT
CONTROL SYSTEM AND SELF-ADAPTIVE STRATEGY FOR THE DRIVING MODE OF AN ENGINE TRANSMISSION UNIT

(30) Priorité: 09.10.2017 FR 1759428
(43) Date de publication de la demande: 19.08.2020
(73) Titulaire: Stellantis Auto SAS, 78300 Poissy (FR)
(72) Inventeur: MILHAU, Yohan, 78630 ORGEVAL (FR); HABBANI, Ridouane, 92600 ASNIERES SUR SEINE (FR); ROCQ, Gaetan, 78125 LA BOISSIERE ECOLE (FR); GRIGORIE, Simona Corina, 92150 Suresnes (FR)
(86) Numéro de dépôt international: PCT/FR2018/052268
(87) Numéro de publication internationale: WO 2019/073135

(56) Documents cités:
- WO-A1-2014/037515
- FR-A1- 2 923 438
- GB-A- 2 483 371
- US-A1- 2013 261 862
- US-A1- 2016 297 440

## Description

L'invention a trait au domaine des véhicules automobiles et plus particulièrement à la gestion de la motricité de véhicules disposants de deux trains roulants à roues motrices.

Le document de brevet publié FR 2 980 408 B1 divulgue un procédé de répartition du couple pour un véhicule hybride. L'utilisateur peut permuter le système de commande du groupe motopropulseur entre plusieurs modes de conduite dont un mode quatre roues motrices (AWD) avec moteur thermique allumé. Ce mode de conduite privilégie la motricité du véhicule au détriment de la consommation. L'utilisateur peut néanmoins oublier de désactiver le mode AWD après la situation nécessitant la motricité et ainsi affecter inutilement la consommation du véhicule. Ce document propose donc un basculement progressif du mode AWD vers un mode AWD secondaire où le moteur thermique est éteint, lorsque la distance parcourue par le véhicule depuis l'activation du mode AWD dépasse une valeur seuil. Ce basculement en dehors du mode AWD se fait de manière autonome sans action du conducteur. Lorsqu'une autre situation nécessitant une motricité accrue se présente, le conducteur peut ne pas être conscient que le véhicule n'est plus en mode AWD. Ceci peut conduire le conducteur à une manoeuvre inadaptée à la situation puisqu'il s'attend à ce que le véhicule ait un comportement routier cohérent avec le mode AWD alors qu'il n'est plus dans ce mode. Aussi, le procédé décrit dans ce document se limite à la distance parcourue par le véhicule en occultant d'autres paramètres de conduite qui pourraient aussi nécessiter la sortie du mode AWD, pour des raisons de sécurité, de consommation, de normes de pollution ou autre. Enfin, le système décrit dans l'état de la technique ne prend pas en compte les contraintes légales récentes de pollution ou de sécurité. Le document de brevet WO 2014/037515A1 divulgue un procédé de répartition du couple pour un véhicule hybride.

L'invention a pour objectif de pallier au moins un des inconvénients de l'état de la technique susmentionné. Plus particulièrement, l'invention a pour objectif de réduire la consommation d'un véhicule sans en limiter la motricité lors de situations où celle-ci est nécessaire.

L'invention a pour objet un système de commande d'un groupe motopropulseur pour véhicule automobile comprenant deux trains de roues motrices, les deux trains étant indépendamment entraînables, le système de commande pouvant fonctionner selon plusieurs modes de conduite sélectionnables par l'occupant du véhicule, dont un mode AWD dans lequel les quatre roues sont entraînées est sélectionné par l'occupant, le système de commande étant apte à permuter de manière autonome depuis le mode AWD vers un mode AWD ECO favorisant les économies de consommation lorsqu'un premier événement prédéterminé se produit, le système de commande étant remarquable en ce qu'il est apte à quitter de manière autonome le mode AWD ECO provisoirement lorsqu'un deuxième événement prédéterminé se produit.

Les deux trains du véhicule peuvent être entraînés indépendamment, et pilotés pour distribuer le couple du ou des moteurs entre le train avant et le train arrière selon le mode de conduite sélectionné. Les deux trains peuvent aussi être entraînés par un ou plusieurs moteur(s) respectifs), comme par exemple un moteur thermique à l'avant et un moteur électrique à l'arrière. La distribution du couple entre le train avant et le train arrière peut ainsi se faire par la gestion des couples délivrées par le(s) moteur(s) entraînant le train avant et le(s) moteur(s) entraînant le train arrière.

Par événement « prédéterminé », on entend un événement prévu lors de la conception du véhicule, acquis par auto-apprentissage lors de la conduite, programmé par configuration de l'utilisateur ou résultant du contexte dans lequel se situe le véhicule (date, coordonnées GPS, type de route, etc.).

Le premier événement se produit lorsque le véhicule se trouve dans une situation où le besoin de motricité est moindre. Ce besoin peut s'exprimer par des critères de roulage, de comportement de conduite, de conditions externes, etc.

Lorsque le mode AWD ECO est quitté, ceci se fait de manière autonome et sans action de la part du conducteur. Généralement, c'est le mode AWD qui est privilégié lors de la sortie du mode AWD ECO.

Par « autonome », on entend que la permutation vers et en dehors du mode AWD ECO est opérée par le véhicule sans action de la part du conducteur. Le conducteur peut d'ailleurs ne pas être averti de cette permutation.

Le mode AWD ECO peut aussi être quitté sous l'action du conducteur lorsqu'il sélectionne un autre mode de conduite, parmi lesquels « Sport », « Confort », « Propulsion » ; « Traction », « Zéro émission », etc.

La sortie du mode AWD ECO est dite « provisoire », lorsqu'il est permis au système de manière autonome de retourner au mode AWD ECO sans action de la part du conducteur.

Selon un mode avantageux de l'invention, le système est aussi apte à quitter de manière autonome le mode AWD ECO permanentement lorsqu'un troisième événement prédéterminé se produit.

Une sortie du mode AWD ECO est dite « permanente » lorsqu'un retour au mode AWD ECO est interdit, même si le deuxième événement se produit à nouveau.

L'expression « premier/deuxième/troisième événement » est un abus de langage désignant un événement d'un premier/deuxième/troisième type et non l'occurrence d'un même événement survenant une première, deuxième puis troisième fois chronologiquement.

Selon l'invention, le premier événement, basculant le système de commande vers le mode AWD ECO, consiste en : une distance parcourue depuis l'activation du mode AWD supérieure à une valeur seuil ; et/ou une vitesse du véhicule supérieure à une valeur seuil ; et/ou une température extérieure supérieure à une valeur seuil ; et/ou une déclivité inférieure à une valeur seuil ; et/ou une accélération latérale inférieure à une valeur seuil ; et/ou une altitude inférieure à une valeur seuil.

Par exemple, la distance parcourue seuil peut être de plusieurs centaines de mètres ou de plusieurs kilomètres. La vitesse seuil peut être de plusieurs dizaines de kilomètres-heure. La température peut être de dix degrés Celsius. La déclivité peut être mesurée en pourcentage de pente (calculée, mesurée, reçue par des données GPS, etc.). L'accélération latérale seuil peut être de 2g. L'altitude peut être de plusieurs centaines de mètres au-dessus du niveau de la mer.

Selon un mode avantageux de l'invention, le deuxième événement, déclenchant la sortie du système de commande du mode AWD ECO, consiste en : une vitesse du véhicule inférieure à une valeur seuil ; et/ou une température extérieure inférieure à une valeur seuil ; et/ou une déclivité supérieure à une valeur seuil ; et/ou une accélération latérale supérieure à une valeur seuil ; et/ou une altitude supérieure à une valeur seuil.

Selon un mode avantageux de l'invention, au moins une des valeurs seuil du premier événement diffère de la valeur seuil correspondante du deuxième événement, créant ainsi au moins une hystérésis entre l'entrée et la sortie du mode AWD ECO.

Par exemple la température seuil du premier événement pour passer dans le mode AWD ECO peut être de 10°C alors que la température seuil pour sortir du mode AWD ECO peut être de -5°C. Ce principe peut également s'appliquer à la vitesse, la déclivité, l'accélération latérale et/ou l'altitude.

Selon un mode avantageux de l'invention, après en être sorti provisoirement, le système est apte à retourner dans le mode AWD ECO lorsque ledit deuxième événement cesse et lorsque le premier événement survient.

Selon un mode avantageux de l'invention, le troisième événement consiste en : l'activation de l'ESP pendant une durée supérieure à une durée seuil ; et/ou le déclenchement de l'ABS pendant une durée supérieure à une durée seuil ; et/ou la détection d'un dysfonctionnement d'un système de sécurité du véhicule pendant une durée supérieure à une durée seuil. Alternativement ou en combinaison, le déclenchement d'un airbag ou de tout autre système de sécurité peut aussi servir de troisième événement. Les seuils en question pour l'ESP, l'ABS ou le dysfonctionnement d'un système de sécurité peuvent être identiques ou différents. La valeur du ou des seuils peut être comprise entre 10 millisecondes et 3 secondes.

Selon un mode avantageux de l'invention, seule une nouvelle mise en action du véhicule et la survenue du premier événement permettent le retour au mode AWD ECO suite à la sortie permanente du mode AWD ECO.

Une « nouvelle mise en action » se caractérise par la mise en route du véhicule après son extinction. Ainsi, l'arrêt du ou des moteurs n'est pas suffisant pour permettre le retour au mode AWD ECO lorsqu'une sortie « permanente » a été opérée.

Optionnellement, des restrictions sont opérées sur la répartition du couple entre le couple transmis au train avant et le couple transmis au train arrière. Les contraintes appliquées au ratio de répartition entre le couple transmis au train avant et le couple transmis au train arrière peuvent être dépendantes de la vitesse du véhicule. Ainsi, le système de commande peut être tel que le ratio est restreint à un intervalle borné par une valeur minimale et une valeur maximale qui dépendent de la vitesse du véhicule, le ratio étant ensuite librement déterminé dans cet intervalle par les conditions de roulage instantanées. Ceci permet par exemple de réduire le risque de glissement à basse vitesse si trop de couple est transmis sur un des essieux.

De manière préférée, l'intervalle est croissant ou constant avec la vitesse, c'est-à-dire que pour une vitesse donnée, l'intervalle est plus grand ou égal à l'intervalle autorisé pour une vitesse inférieure à cette vitesse donnée.

Selon un mode avantageux de l'invention, la valeur minimale du ratio est constante en-dessous d'une première valeur seuil de vitesse et/ou au-delà d'une seconde valeur seuil ; et/ou la valeur maximale du ratio est constante en-dessous d'une première valeur seuil de vitesse et/ou au-delà d'une seconde valeur seuil ; et/ou la valeur minimale diminue en fonction de la vitesse entre une première valeur seuil de vitesse et une seconde valeur seuil de vitesse ; et/ou la valeur maximale augmente en fonction de la vitesse entre une première valeur seuil de vitesse et une seconde valeur seuil de vitesse.

Les valeurs seuil de vitesse peuvent être différentes pour la courbe du ratio maximal et celle du ratio minimal.

Entre deux valeurs seuil de vitesse, la courbe du ratio maximal et/ou minimal peut être une droite. Elle peut aussi être une courbe avec un point d'inflexion et à pente nulle au niveau des valeurs seuil de vitesse pour ne pas générer d'à-coups et faire régulièrement évoluer la distribution du couple, dans les situations où le ratio est au maximum de l'intervalle ou au minimum et que le véhicule franchit (en accélération ou décélération) une valeur seuil de vitesse.

Selon un mode avantageux de l'invention, les valeurs minimale et maximale du ratio sont respectivement comprises entre 25 et 35%, et entre 65 et 75% en-dessous d'une vitesse seuil de 10 km/h +/-5 km/h. Ainsi, par exemple, la valeur minimale peut être de 30% en-dessous de 10 km/h et la valeur maximale peut être de 70% en-dessous de 15 km/h.

Selon un mode avantageux de l'invention, les valeurs minimale et maximale du ratio sont respectivement comprises entre 0% et 5%, et entre 95% et 100% au-dessus d'une vitesse seuil de 25 km/h +/-10 km/h. Ainsi, par exemple, la valeur minimale peut être de 0% au-dessus de 35 km/h et la valeur maximale peut être de 98% au-dessus de 32 km/h.

Selon un mode avantageux de l'invention, l'intervalle de valeurs du ratio de distribution du couple est complémentairement restreint en fonction de la déclivité, la température extérieure, l'accélération latérale et/ou l'altitude. Ainsi, à titre d'illustration, un intervalle compris entre 30 et 70% à une vitesse donnée peut être restreint à un intervalle de 40 à 55% si la pente de la route qui est parcourue par le véhicule est supérieure à 5%.

Selon un mode avantageux de l'invention, l'intervalle de valeurs du ratio de distribution du couple est complémentairement restreint en fonction de la quantité de couple donné en consigne par le conducteur. Ainsi, à titre d'illustration, un intervalle compris entre 30 et 70% à une vitesse donnée peut être restreint à un intervalle de 50 à 65% si la consigne de couple ordonnée par le conducteur dépasse un seuil, par exemple 80% du couple total délivrable par l'ensemble des moyens moteurs du véhicule.

Selon un mode avantageux de l'invention, lorsque le couple de consigne est positif, l'intervalle entre la valeur minimale et la valeur maximale de ratio de distribution du couple est plus petit que lorsque le couple de consigne est négatif.

Ainsi, il est donné plus de liberté au ratio de répartition du couple lorsque la consigne de couple est négative que lorsque la consigne de couple est positive. Un couple de consigne peut être positif lors d'une phase d'accélération sur route plane. Un couple de consigne peut être négatif lors d'une levée du pied de l'accélérateur.

Si préférentiellement des restrictions sur la répartition du couple sont opérées en fonction de la vitesse dans le mode AWD ECO, des restrictions équivalentes peuvent être imposées dans d'autres modes de conduite également.

L'invention porte également sur un véhicule automobile comprenant deux trains roulants entraînables indépendamment, remarquable en ce qu'il comprend un système de commande selon l'un des modes de réalisation décrit ci-dessus.

Selon un mode avantageux de l'invention, le véhicule dispose d'une motorisation hybride avec notamment un moteur thermique entraînant le train avant et un moteur électrique, à air comprimé ou hydraulique entraînant le train arrière.

L'architecture mécanique du véhicule selon l'invention comprend des actionneurs connus et présentés par exemple en figure 1 du document FR 2 980 408 B1.

Ainsi dans un exemple préféré de l'invention, le véhicule comprend un moteur thermique attelé à une boite de vitesse, une machine électrique reliée aux roues arrière, une machine électrique reliée à la boite de vitesse, un démarreur connecté sur le réseau très basse tension (12V) et au moins une batterie (par exemple 220V) pour alimenter les machines électriques.

Le problème exposé ci-dessus peut également être résolu par un procédé de répartition du couple entre le train avant et le train arrière, comprenant au moins une étape de permutation entre un mode de conduite et un autre mode de conduite et gouvernant le fonctionnement du système de commande selon l'un des modes de réalisation exposé ci-dessus.

Des avantages de la présente invention seront mieux compris à l'aide de la description et des dessins parmi lesquels :
- La figure 1 décrit un chronogramme illustrant un exemple de gestion des modes de conduite ;
- La figure 2 illustre les limitations appliquées au ratio de répartition du couple en mode AWD ECO.

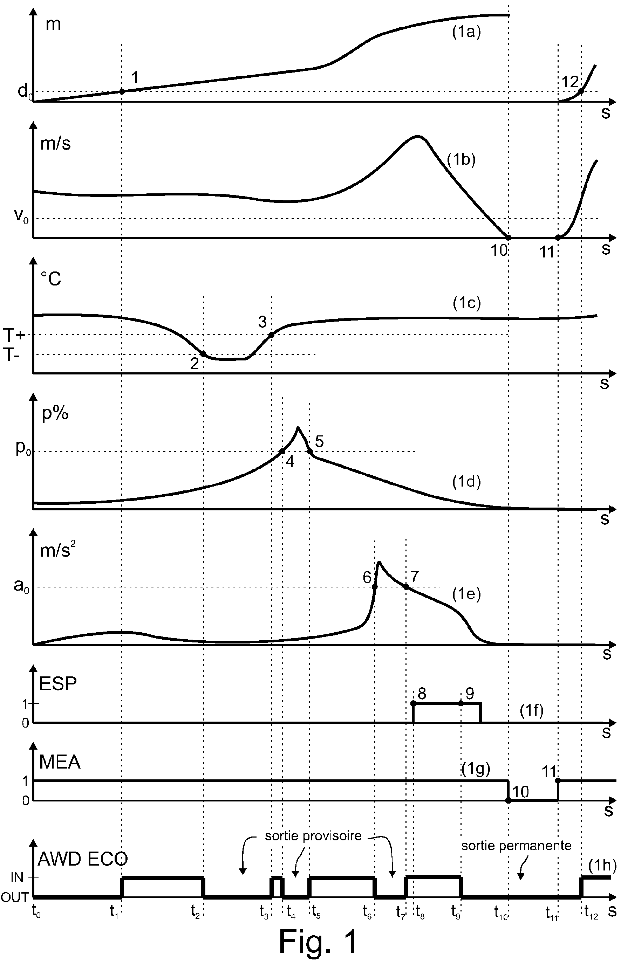

La figure 1 illustre un chronogramme décrivant le fonctionnement du système de commande selon l'invention. Les courbes (1a) à (1h) décrivent respectivement : (1a) la distance, (1b) la vitesse, (1c) la température extérieure, (1d) la déclivité, (1e) l'accélération latérale, (1f) l'état de mise en action du véhicule, (1g) l'état de l'ESP et (1h) l'état du mode AWD ECO. Toutes les courbes sont synchrones et ont pour axe des abscisses le temps. Les courbes (1a) à (1e) montrent les valeurs seuil respectives, notées d₀, v₀, T+, T-, p₀ et a₀.

A l'instant t₀, le conducteur active le mode AWD. La courbe (1a) montre la distance relative qui est parcourue à partir de cet instant t₀.

A l'instant t₁, la distance parcourue depuis l'activation du mode AWD est égale à une valeur seuil d₀. Le point 1 de la courbe (1a) matérialise la survenue de ce premier événement. Comme aucun besoin de motricité n'est détecté (qui serait dû par exemple à la pente, l'accélération latérale, la température ou le déclenchement de l'ESP), il est considéré qu'une économie de carburant peut être faite et le système de commande bascule en mode AWD ECO.

A l'instant t₂, la température chute en dessous de la valeur seuil T-. Il est ainsi détecté un deuxième événement et un besoin de motricité (neige, verglas, etc.). Le mode AWD ECO est donc quitté provisoirement. La température remonte ensuite au-delà de la valeur T+. A l'instant t₃, le mode AWD ECO est donc à nouveau activé. A noter que les valeurs T- et T+ montrent une hystérésis qui peut être appliquée aux autres paramètres. Les points 2 et 3 de la courbe (1c) matérialisent ces événements.

A l'instant t₄, la déclivité, ou la pente en % sur laquelle le véhicule roule dépasse une valeur seuil p₀. Un besoin de motricité est donc détecté et le mode AWD ECO est donc quitté provisoirement. Lorsque la pente retombe en-dessous de la valeur seuil p₀, à l'instant t₅, le mode AWD ECO est réactivé. Les points 4 et 5 de la courbe (1d) matérialisent ces événements.

A l'instant t₆, l'accélération latérale (en virage) dépasse la valeur seuil a₀. Un besoin de motricité est donc détecté et le mode AWD ECO est quitté provisoirement. Lorsque l'accélération retombe en-dessous de la valeur seuil a₀, à l'instant t₇, le mode AWD ECO est réactivé. Les points 6 et 7 de la courbe (1e) matérialisent ces événements.

A l'instant ts, l'ESP se déclenche. Le mode AWD ECO est maintenu malgré l'activation de l'ESP. Ce n'est que lorsque la durée de déclenchement de l'ESP dépasse une valeur seuil que le mode AWD ECO est quitté. Cette durée seuil correspond à la différence t₉-t₈. Ainsi, à l'instant t₉, l'ESP a été déclenché pendant suffisamment longtemps pour que le mode AWD ECO soit quitté, cette fois-ci de manière permanente. Les points 8 et 9 de la courbe (1f) matérialisent ces événements.

L'ESP cesse de fonctionner un peu après t₉ mais le mode AWD ECO n'est plus réactivé bien que les conditions de distance, température, déclivité accélération latérale et vitesse soient remplies, car la sortie du mode AWD ECO qui a été effectuée en tg est permanente.

A l'instant t₁₀, le conducteur arrête le véhicule et l'éteint. A l'instant t₁₁, une nouvelle mise en action est opérée. Les points 10 et 11 sur les courbes (1b) et (1g) matérialisent ces événements.

Par hypothèse dans cet exemple, à l'instant t₁₁, le véhicule est en mode AWD, soit grâce à la mémoire du système de commande qui a maintenu le véhicule dans le dernier mode avant extinction, soit par action du conducteur.

Les courbes (1d) et (1e) sont nulles à partir de cet instant et montrent que le redémarrage se fait sur route plane en ligne droite.

A l'instant t₁₂, la distance parcourue depuis la (nouvelle) mise en mode AWD correspond à d₀. La vitesse est au-dessus du seuil v₀. La température est supérieure à T+. Le système de commande bascule donc en mode AWD ECO.

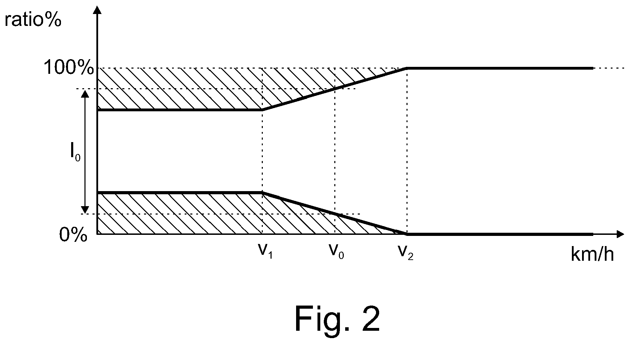

La figure 2 illustre les limitations qui peuvent être appliquées au ratio de répartition du couple en mode AWD ECO. En abscisse se présente la vitesse du véhicule en km/h. En ordonnée figure le ratio de répartition du couple entre le train avant et le train arrière. Un ratio de 0% correspond à un couple complètement transmis sur le train arrière. Un ratio de 100% correspond à un couple complètement transmis sur le train avant.

Les zones hachurées sont des zones interdites pour le ratio. Ces zones sont délimitées par une courbe inférieure et une courbe supérieure qui définissent la valeur minimale et la valeur maximale bornant les intervalles possibles du ratio en fonction de la vitesse.

Dans cet exemple, deux valeurs seuil de vitesse v₁ et v₂ sont définies. En-dessous de v₁ et au-dessus de v₂, les valeurs minimale et maximale sont constantes. Entre v₁ et v₂, les valeurs minimales et maximales varient progressivement, par exemple linéairement.

Pour une vitesse donnée v₀ (ici représentée arbitrairement entre v₁ et v₂), ce graphique donne un intervalle I₀ qui borne le ratio. Cet intervalle est faible à basse vitesse et il est plus élevé à haute vitesse.

Par exemple, l'intervalle en-dessous de v₁ peut être de 30 à 70% ; v₁ peut être égal à 10 km/h et v₂ peut être égal à 25 km/h.

Au-dessus de v₂, l'intervalle autorisé peut être de 0 à 100%. En d'autres termes, aucune contrainte n'est appliquée sur le ratio de distribution du couple. Celui-ci résultera donc seulement du contact roues/route.

## Revendications

1. Système de commande d'un groupe motopropulseur pour véhicule automobile comprenant deux trains de roues motrices, les deux trains étant indépendamment entraînables, le système de commande pouvant fonctionner selon plusieurs modes de conduite sélectionnables par l'occupant du véhicule, dont un mode AWD dans lequel les quatre roues sont entraînées est sélectionné par l'occupant, le système de commande étant apte à permuter de manière autonome depuis le mode AWD vers un mode AWD ECO favorisant les économies de consommation lorsqu'un premier événement prédéterminé se produit, le système de commande étant **caractérisé en ce qu'**il est apte à quitter de manière autonome le mode AWD ECO provisoirement lorsqu'un deuxième événement prédéterminé se produit, et **en ce que** le premier événement, basculant le système de commande vers le mode AWD ECO, consiste en :
- une distance parcourue depuis l'activation du mode AWD supérieure à une valeur seuil ; et/ou
- une vitesse du véhicule supérieure à une valeur seuil ; et/ou
- une température extérieure supérieure à une valeur seuil ; et/ou
- une déclivité inférieure à une valeur seuil ; et/ou
- une accélération latérale inférieure à une valeur seuil ; et/ou
- une altitude inférieure à une valeur seuil..

2. Système de commande selon la revendication 1, **caractérisé en ce qu'**il est aussi apte à quitter de manière autonome le mode AWD ECO permanentement lorsqu'un troisième événement prédéterminé se produit.

3. Système de commande selon l'une des revendications 1 à 2, **caractérisé en ce que** le deuxième événement, déclenchant la sortie du système de commande du mode AWD ECO, consiste en :
- une vitesse du véhicule inférieure à une valeur seuil ; et/ou
- une température extérieure inférieure à une valeur seuil ; et/ou
- une déclivité supérieure à une valeur seuil ; et/ou
- une accélération latérale supérieure à une valeur seuil ; et/ou
- une altitude supérieure à une valeur seuil.

4. Système de commande selon la revendication 3, **caractérisé en ce qu'**au moins une des valeurs seuil du premier événement diffère de la valeur seuil correspondante du deuxième événement, créant ainsi au moins une hystérésis entre l'entrée et la sortie du mode AWD ECO.

5. Système de commande selon l'une des revendications 1 à 4, **caractérisé en ce qu'**après en être sorti provisoirement, le système est apte à retourner dans le mode AWD ECO lorsque ledit deuxième événement cesse et lorsque le premier événement survient.

6. Système de commande selon l'une des revendications 1 à 5, **caractérisé en ce que** le troisième événement consiste en :
- l'activation de l'ESP pendant une durée supérieure à une durée seuil ; et/ou
- le déclenchement de l'ABS pendant une durée supérieure à une durée seuil ; et/ou
- la détection d'un dysfonctionnement d'un système de sécurité du véhicule pendant une durée supérieure à une durée seuil.

7. Système de commande selon l'une des revendications 1 à 6 en combinaison de la revendication 2, **caractérisé en ce que** seule une nouvelle mise en action du véhicule et la survenue du premier événement permettent le retour au mode AWD ECO suite à la sortie permanente du mode AWD ECO.

8. Véhicule automobile comprenant deux trains roulants entraînables indépendamment, **caractérisé en ce qu'**il comprend un système de commande selon l'une des revendications 1 à 7.

9. Véhicule selon la revendication 8, **caractérisé en ce qu'**il dispose d'une motorisation hybride avec notamment un moteur thermique entraînant le train avant et un moteur électrique, à air comprimé ou hydraulique entraînant le train arrière.

## Patentansprüche

1. System zur Steuerung eines Antriebsstrangs für ein Kraftfahrzeug, das zwei Sätze Antriebsräder umfasst, wobei die beiden Sätze unabhängig voneinander antreibbar sind, wobei das Steuersystem in mehreren vom Fahrzeuginsassen wählbaren Fahrmodi arbeiten kann, einschließlich eines AWD-Modus, in dem die vier Räder angetrieben werden, wird vom Insassen ausgewählt, wobei das Steuersystem in der Lage ist, autonom vom AWD-Modus in einen AWD-ECO-Modus umzuschalten, der eine Verbrauchseinsparung fördert, wenn ein erstes vorbestimmtes Ereignis eintritt, wobei das Steuersystem **dadurch gekennzeichnet ist dass** es in der Lage ist, den AWD-ECO-Modus selbstständig zu verlassen vorübergehend, wenn ein zweites vorbestimmtes Ereignis auftritt, und dass das erste Ereignis, das Umschalten des Steuersystems in den AWD-ECO-Modus, aus Folgendem besteht:
- eine seit der Aktivierung des AWD-Modus zurückgelegte Strecke, die größer als ein Schwellenwert ist; und oder
- eine Fahrzeuggeschwindigkeit, die über einem Schwellenwert liegt; und oder
- eine Außentemperatur über einem Schwellenwert; und oder
- eine Steigung, die unter einem Schwellenwert liegt; und oder
- eine Querbeschleunigung, die unter einem Schwellenwert liegt; und oder
- eine Höhe unter einem Schwellenwert.

2. Steuersystem nach Anspruch 1, **dadurch gekennzeichnet, dass** es auch in der Lage ist, den AWD-ECO-Modus automatisch dauerhaft zu verlassen, wenn ein drittes vorgegebenes Ereignis eintritt.

3. Steuersystem nach einem der Ansprüche 1 bis 2, **dadurch gekennzeichnet, dass** das zweite Ereignis, das den Ausstieg des Steuersystems aus dem AWD-ECO-Modus auslöst, besteht aus:
- eine Fahrzeuggeschwindigkeit, die unter einem Schwellenwert liegt; und oder
- eine Außentemperatur unter einem Schwellenwert; und oder
- eine Steigung, die größer als ein Schwellenwert ist; und oder
- eine Querbeschleunigung größer als ein Schwellenwert und/oder
- eine Höhe größer als ein Schwellenwert.

4. Steuersystem nach Anspruch 3, **dadurch gekennzeichnet, dass** sich mindestens einer der Schwellenwerte des ersten Ereignisses vom entsprechenden Schwellenwert des zweiten Ereignisses unterscheidet und so mindestens eine Hysterese zwischen dem Eintritt und dem Verlassen des AWD-ECO-Modus entsteht.

5. Steuersystem nach einem der Ansprüche 1 bis 4, **dadurch gekennzeichnet, dass** das System nach vorübergehendem Verlassen in den AWD-ECO-Modus zurückkehren kann, wenn das zweite Ereignis aufhört und das erste Ereignis eintritt.

6. Steuerungssystem nach einem der Ansprüche 1 bis 5, **dadurch gekennzeichnet, dass** das dritte Ereignis besteht aus:
- Aktivierung des ESP für eine Dauer, die über einer Schwellendauer liegt; und oder
- Auslösen des ABS für eine Dauer, die größer als eine Schwellendauer ist; und oder
- Erkennung einer Fehlfunktion eines Fahrzeugsicherheitssystems für eine Dauer, die über einer Schwellendauer liegt.

7. Steuersystem nach einem der Ansprüche 1 bis 6 in Verbindung mit Anspruch 2, **dadurch gekennzeichnet, dass** nur eine erneute Aktivierung des Fahrzeugs und das Eintreten des ersten Ereignisses die Rückkehr in den AWD-ECO-Modus nach dem dauerhaften Verlassen des AVVD-ECO-Modus ermöglichen.

8. Kraftfahrzeug mit zwei antreibbaren Fahrwerken unabhängig, **dadurch gekennzeichnet, dass** es ein Steuersystem nach einem der Ansprüche 1 bis 7 umfasst.

9. Fahrzeug nach Anspruch 8, **dadurch gekennzeichnet, dass** es einen Hybridmotor mit insbesondere einem die Vorderachse antreibenden Wärmemotor und einem die Hinterachse antreibenden Elektro-, Druckluft- oder Hydraulikmotor aufweist.

## Claims

1. System for controlling a powertrain for a motor vehicle comprising two sets of driving wheels, the two sets being independently driveable, the control system being able to operate in several driving modes selectable by the occupant of the vehicle, including an AWD mode in which the four wheels are driven is selected by the occupant, the control system being capable of switching autonomously from AWD mode to an AWD ECO mode promoting consumption savings when a first predetermined event occurs, the control system being **characterized in that** that it is capable of autonomously leaving AWD ECO mode temporarily when a second predetermined event occurs, and **in that** the first event, switching the control system to AWD ECO mode, consists of:
- a distance traveled since activation of AWD mode greater than a threshold value; and or
- a vehicle speed greater than a threshold value; and or
- an outside temperature above a threshold value; and or
- a slope lower than a threshold value; and or
- a lateral acceleration lower than a threshold value; and or
- an altitude below a threshold value.

2. Control system according to claim 1, **characterized in that** it is also capable of autonomously leaving the AWD ECO mode permanently when a third predetermined event occurs.

3. Control system according to one of claims 1 to 2, **characterized in that** the second event, triggering the exit of the control system from AWD ECO mode, consists of:
- a vehicle speed lower than a threshold value; and or
- an outside temperature below a threshold value; and or
- a slope greater than a threshold value; and or
- a lateral acceleration greater than a threshold value and/or
- an altitude greater than a threshold value.

4. Control system according to claim 3, **characterized in that** at least one of the threshold values of the first event differs from the corresponding threshold value of the second event, thus creating at least one hysteresis between the entry and exit of the AWD ECO mode.

5. Control system according to one of claims 1 to 4, **characterized in that** after having temporarily exited it, the system is able to return to the AWD ECO mode when said second event ceases and when the first event occurs.

6. Control system according to one of claims 1 to 5, **characterized in that** the third event consists of:
- activation of the ESP for a duration greater than a threshold duration; and or
- triggering the ABS for a duration greater than a threshold duration; and or
- detection of a malfunction of a vehicle safety system for a duration greater than a threshold duration.

7. Control system according to one of claims 1 to 6 in combination with claim 2, **characterized in that** only a new activation of the vehicle and the occurrence of the first event allow the return to AWD ECO mode following the permanent exit of the AVVD ECO mode.

8. Motor vehicle comprising two driveable running gears independently, **characterized in that** it comprises a control system according to one of claims 1 to 7.

9. Vehicle according to claim 8, **characterized in that** it has a hybrid engine with in particular a thermal engine driving the front axle and an electric, compressed air or hydraulic motor driving the rear axle.
